# EUROPEAN PATENT APPLICATION

(11) **EP 4 385 965 A1**
(43) Date of publication of application: **19.06.2024**
(21) Application number: 22306852.9
(22) Date of filing: 12.12.2022
(51) Int. Cl.: C04B 35/185, C04B 35/195, C04B 35/64, F27D 5/00, C04B 38/00

(54) **SAGGARS**

(71) Applicant: ImerTech SAS, 75015 Paris (FR)
(72) Inventor: WEBER, Monika Josefa, 37671 Höxter (DE); GONZÁLEZ CASTRO, Magdalena, 36740 Tomiño Pontevedra (ES); GASGNIER, Gilles, 87170 Isle (FR); LABOULFIE, Fabien, 31130 Balma (FR)
(74) Representative: Haseltine Lake Kempner LLP

(57) **Abstract**

A saggar having a body comprising a base and one or more sidewalls, wherein the base and the one or more sidewalls have a thickness no greater than about 19 mm and the saggar comprising no more than about 60 wt. % Al₂O₃, based on the total weight of the saggar; and a method of making the saggar.

## Description

### TECHNICAL FIELD

The present disclosure concerns saggars and methods of making saggars.

### BACKGROUND

A saggar is a boxlike item of kiln furniture which can be used to carry and/or protect a powder. Saggars have traditionally been used in the firing or calcining of powders, for example, catalytic powders and/or battery electrode material powders, which may be used in modern electric vehicles.

Saggars are often produced using methods which involve pressing ceramic powders into moulds to produce greens or preforms.

As the need for such powders increases, so does the need for improved methods and equipment used in their production. One particular need is for improved saggars which may be stronger and/or lighter, and chemically resistant to the powders at high temperature.

### SUMMARY OF THE INVENTION

According to the invention there is provided a saggar and method as defined in any one of the accompanying claims.

In an embodiment, the present invention provides a saggar having a body comprising a base and one or more sidewalls, wherein:
the base and the one or more sidewalls have a thickness no greater than about 19 mm, for example, no greater than about 15 mm, or no greater than about 13 mm, or no greater than about 10 mm, or no greater than about 8 mm; and the saggar comprises no more than about 60 wt. % Al₂O₃, preferably, no more than about 50 wt.% Al₂O₃ based on the total weight of the saggar; and:
the saggar has a density from about 1.6 g/cm³ to about 3.0 g/cm³, for example from about 1.8 g/cm³ to about 2.8 g/cm³; and/or
the saggar has a porosity from about 15 % to about 35 %, for example, from about 18 % to about 30 % based on the total volume of the saggar; and/or
the saggar has a coefficient of thermal expansion from about 1.5 × 10⁻⁶ K⁻¹ to about 5.0 × 10⁻⁶ K⁻¹, for example, from about 2.0 × 10⁻⁶ K⁻¹ to about 4.0 × 10⁻⁶ K⁻¹; and/or the saggar has a modulus of rupture no less than about 15 MPa, for example, no less than about 20 MPa, or no less than about 23 MPa; and/or
a ratio of the modulus of rupture of the saggar to the thickness is no less than about 1.5 MPa/mm, for example, no less than about 1.7 MPa/mm, and preferably in the range of from 1.5 MPa/mm to 3.0 MPa/mm.

The saggar of the invention provides desirable structural properties which enable the saggar to have a reduced weight, and in turn this improves its handling and transport.

The saggar may comprise about 20 to about 40 wt.% mullite, about 35 wt.% to about 45% cordierite; and optionally about 5 to 25 wt.% spinel, based on the total weight of the saggar.

Preferably, the saggar may comprise about 20 to about 40 wt.% mullite, about 35 wt.% to about 45% cordierite; and optionally about 5 to 15 wt.% spinel, based on the total weight of the saggar.

The saggar may have a water absorption from about 5 % to about 20 %, for example, from about 8 % to about 15 %, based on the total weight of the saggar.

Alternatively, the saggar may comprise: from about 5 wt. % to about 60 wt. %, for example, from about 40 wt. % to about 60 wt. % SiO₂, based on the total weight of the saggar and from about 30 wt. % to about 60 wt. %, for example, from about 30 wt. % to about 50 wt. %, Al₂O₃, based on the total weight of the saggar, optionally wherein the saggar may comprise: no more than about 2.0 wt. %, for example, from about 0.1 wt. % to about 2.0 wt. % Fe₂O₃, based on the total weight of the saggar; no more than about 1.0 wt. %, for example, from about 0.05 wt. % to about 1.0 wt. % TiO₂, based on the total weight of the saggar; no more than about 1.0 wt. %, for example, from about 0.01 wt. % to about 1.0 wt. % CaO, based on the total weight of the saggar; from about 4 wt. % to about 10 wt. % MgO, based on the total weight of the saggar; no more than about 2.0 wt. %, for example, from about 0.01 wt. % to about 2.0 wt. % K₂O, based on the total weight of the saggar; and/or no more than about 0.5 wt. %, for example, from about 0.01 wt. % to about 0.5 wt. % Na₂O, based on the total weight of the saggar.

The saggar may be for retaining a powder during calcination, for example, wherein the saggar is for retaining a battery electrode material powder such as a battery cathode material powder, for example, wherein the saggar is for retaining one or more oxides, hydroxides, carbonates, sulphates and/or phosphates of lithium, titanium, vanadium, chromium, manganese, iron, cobalt and/or nickel.

It has surprisingly been found that making a saggar by pressure casting methods results in a stronger saggar (stronger, for example, in terms of the modulus of rupture of the saggar).

In turn, the increased strength of the saggar enables the thickness of saggar body, including its base and/or walls to be reduced, reducing in handling, transport and cost efficiencies.

Reduction in the thickness of saggar body bases and/or walls can also lead to reductions in raw material consumption, reductions in the amount of material to be recycled at the end of a saggar lifetime, reductions in thermal inertia, and reductions in thermal gradients. It also reduces the weight of the saggar, which is an advantage for manutention, and also easier for the transportation.

It has also surprisingly been found a saggar can be produced with a lower Al₂O₃ content by pressure casting in accordance with the invention. The lower Al₂O₃ content results in a saggar which is at least as strong (for example in terms of the modulus of rupture of the saggar) as a saggar with a high Al₂O₃ content, and results in a higher weight reduction, at a lower cost of production.

There is also provided a method of making a saggar for use in a kiln, the method comprising: pressure casting a slip composition within a mould cavity at a pressure from about 200 kPa to about 4000 kPa to form a green saggar body; removing the green saggar body from the mould cavity; and
firing the green saggar body to produce a fired saggar body,

During pressure casting of the slip composition within the mould cavity, filtrate may be removed from the mould cavity via an outlet configured to impede passage of a solid component of the slip composition therethrough.

The slip composition may comprise one or more phyllosilicate minerals and water. Phyllosilicate minerals include calcined and not calcined phyllosilicate minerals. Optionally, the one or more phyllosilicate minerals may comprise: kaolin; smectite; illite; chlorite; talc; vermiculite; palygorskite; sepiolite; silicoaluminous chamotte and/or any combination thereof. Further optionally, the slip composition may comprise: alumina, for example, calcined alumina; corundum; magnesium carbonate, for example, magnesite; mullite, kyanite; a spinel; and/or any combination thereof. For example, the slip composition comprises kaolin, calcined kaolin, talc, calcined alumina, corundum, mullite and/or calcined clay, and any combination thereof.

The slip composition may comprise a deflocculant and/or a binder, for example, a polycarboxylic acid, a polysaccharide and/or a lignosulfonate.

The slip composition may have: a density from about 1500 g/L to about 3000 g/L, for example, from about 1800 g/L to about 2800 g/L, or from about 2000 g/L to about 2100 g/L, or from about 2550 g/L to about 2650 g/L; a thixotropy, as measured by Gallenkamp universal torsion viscometry with a first viscosity (i.e. overswing) measurement taken immediately after stirring and a second viscosity (i.e. overswing) measurement taken 5 minutes after stirring, from about 15 °G to about 30 °G; and/or a moisture content from about 10 wt. % to about 30 wt. % based on the total weight of the saggar.

The saggar may have a base and one or more sidewalls.

It may be that the base and each of the one or more sidewalls have a thickness no greater than about 19 mm, for example, no greater than about 17 mm, no greater than about 15 mm, no greater than about 13 mm, no greater than about 10 mm, or no greater than about 8 mm, and the saggar, i.e. the fired saggar body, has a modulus of rupture no less than about 15 MPa, for example, no less than about 20 MPa, or no less than about 23 MPa.

The saggar may be for retaining a powder during calcination. For example, the saggar may be for retaining a battery electrode material powder such as a battery cathode material powder. For example, the saggar may be for retaining one or more oxides, hydroxides, carbonates, sulphates and/or phosphates of lithium, titanium, vanadium, chromium, manganese, iron, cobalt and/or nickel.

The skilled person will appreciate that, except where mutually exclusive, a feature described in relation to any one of the above aspects may be applied *mutatis mutandis* to any other aspect. Furthermore, except where mutually exclusive, any feature described herein may be applied to any aspect and/or combined with any other feature described herein.

### BRIEF DESCRIPTION OF FIGURES

Embodiments will now be described by way of example only, with reference to the Figures, in which:
**Figure 1** provides a perspective view of a box saggar; and
**Figure 2** shows (a) a cross-sectional view and (b) a plan view of the box saggar of **Figure 1****.**

### DETAILED DESCRIPTION

### Saggar

A saggar, also called sagger, is a container suitable for carrying and/or protecting a load in a kiln or furnace, more specifically a box-like type ceramic container, used for firing or calcining powders, for example catalytic powders and/or battery electrode material powders which may be used in modern electric vehicles.

The saggar typically comprises (e.g. may be) a receptacle for retaining the load. The saggar may also comprise a lid (for example, a plate) for covering (e.g. closing) an opening of the receptacle.

The saggar (e.g. the receptacle) typically has a body comprising (e.g. formed from or consisting of) a base and one or more sidewalls. The body is typically box shaped. A saggar may therefore be known as a box saggar.

It will be appreciated that the base and the one or more sidewalls may take various shapes, dependent on the design of the saggar.

The base is typically flat or planar. The base may be polygonal (e.g. rectangular, or square) in shape. It will be appreciated that a (e.g. substantially) polygonal base does not necessarily have sharp vertices but may instead have rounded vertices.

Each of the one or more sidewalls may be (e.g. substantially) flat (i.e. planar). Preferably, the base may be substantially rectangular in shape and the saggar may comprise four sidewalls, wherein each sidewall is a substantially flat panel connected to the substantially rectangular base at a corresponding edge.

The one or more sidewalls may extend generally vertically upwards from the base (i.e. when the saggar is arranged in use such that its base is substantially horizontal). Each of the one or more sidewalls may therefore be arranged substantially orthogonal to the base, although one or more of the sidewalls may also be inclined slightly outwards (i.e. away from the interior space enclosed by the saggar). For example, each of the one or more sidewalls may extend away from the base at an angle from about 80° to about 100°, for example, from about 85° to about 95°, or from about 87° to about 93°, or from about 88° to about 92°.

The thickness of the base and the one or more sidewalls may substantially uniform across the entire saggar. Alternatively, the thickness may vary. For example, the thickness of the base and of the one of more sidewalls may vary by no more than about 3 mm, or no more than about 2 mm, or no more than about 1 mm, across the base and one or more sidewalls.

The base and the one or more sidewalls may have a thickness (e.g. a maximum thickness, for example, the thickness of the base at a point at which it is a maximum) no greater than about 19 mm, for example, no greater than about 18 mm, or no greater than about 16 mm, or no greater than about 15 mm, or no greater than about 14 mm, or no greater than about 12 mm, or no greater than about 10 mm, or no greater than about 8 mm. The base and the one or more sidewalls may have a thickness (e.g. a minimum thickness, for example, the thickness of the base at a point at which it is a minimum) no less than about 4 mm, for example, no less than about 5 mm, or no less than about 6 mm, or no less than about 8 mm, or no less than about 10 mm, or no less than about 12 mm. The base and the one or more sidewalls may have a thickness (e.g. a maximum thickness, a minimum thickness, or an average thickness being the mean of the maximum thickness and the minimum thickness) from about 4 mm to about 19 mm, for example, from about 4 mm to about 18 mm, or from about 4 mm to about 16 mm, or from about 4 mm to about 15 mm, or from about 4 mm to about 14 mm, or from about 4 mm to about 12 mm, or from about 4 mm to about 10 mm, or from about 8 mm to about 15 mm, or from about 8 mm to about 14 mm, or from about 8 mm to about 12 mm, or from about 8 mm to about 10 mm.

The base may have a length and width. The length and the width may be measured at right angles to one another. The length and the width of the base may be the length and the width of the saggar, i.e the fired saggar body.

Each sidewall may have a height. The height may be a straight-line distance measured between a lowermost edge of the sidewall, where it meets the base, and an uppermost edge of the sidewall. The height may be measured along a line perpendicular to the lowermost edge of the sidewall (where it meets the base).

The height of the sidewall may be substantially uniform. Alternatively, the height of the sidewall may vary, dependent on the profile of the sidewall.

Each sidewall may have a height (e.g. a minimum height, for example, at a point where the height of the sidewall is at a minimum for embodiments in which the height is not uniform) no less than about 50 mm, for example, no less than about 60 mm, or no less than about 70 mm, or no less than about 80 mm, or no less than about 90 mm, or no less than about 100 mm. Each sidewall may have a height (e.g. a maximum height, for example, at a point where the height of the sidewall is at a maximum for embodiments in which the height is not uniform) no more than about 200 mm, for example, no more than about 190 mm, or no more than about 180 mm, or no more than about 170 mm, or no more than about 160 mm, or no more than about 160 mm, or no more than about 150 mm, or no more than about 140 mm, or no more than about 130 mm, or no more than about 120 mm.

It may be that the saggar, i.e. the fired saggar body, has a mass, when unfilled, no less than about 2 kg, for example, no less than about 3 kg, no less than about 4 kg, or no less than about 5 kg. It may be that the body has a mass, when unfilled, no more than about 6 kg, for example, no more than about 5 kg, or no more than about 4 kg. It may be that the body has a mass, when unfilled, from about 2 kg to 6 kg, for example, from about 3 kg to about 5 kg, or from about 3 kg to about 4 kg, or from about 4 kg to about 5 kg.

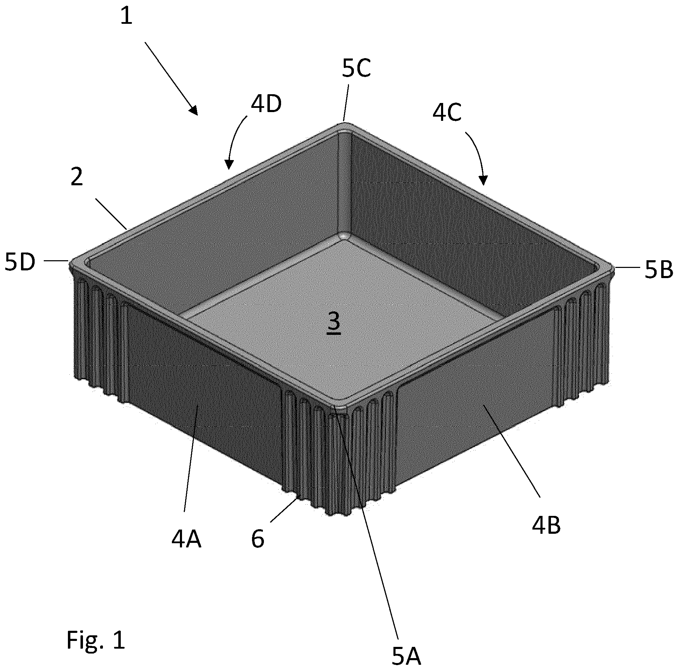

An example box saggar 1 is illustrated in Figure 1. The saggar 1 has a box-shaped fired saggar body 2. The body 2 has a base 3 and four sidewalls 4A, 4B, 4C and 4D. The four sidewalls 4A, 4B, 4C and 4B meet at rounded corners 5A, 5B, 5C and 5D. The exteriors of the sidewalls 4A, 4B, 4C and 4D are ridged proximate the rounded corners 5A, 5B, 5C and 5D, as indicated, for example, at 6.

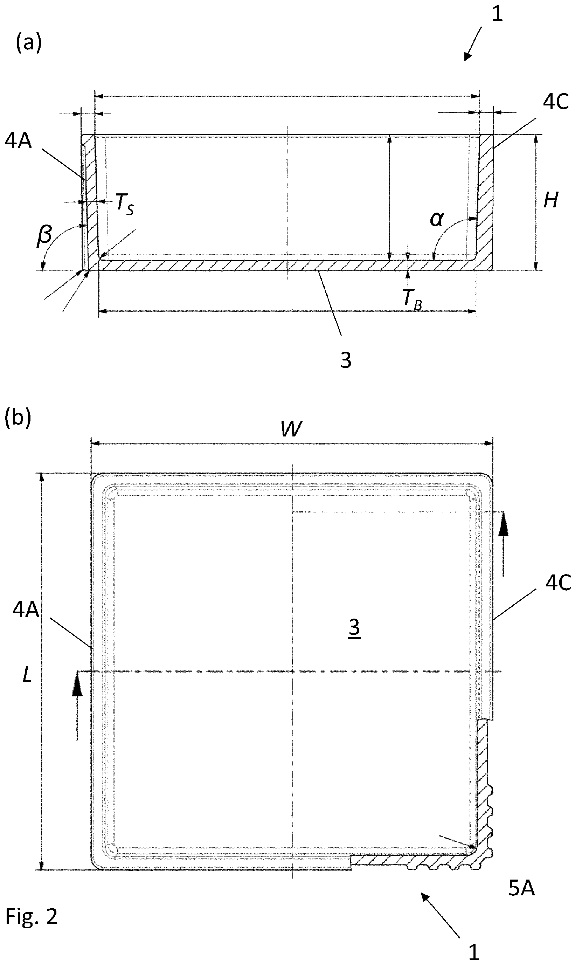

Figure 2 shows the saggar 1 in (a) cross-section and (b) plan view. The length of the base is indicated as *L.* The width of the base is indicated as *W.* The height of a sidewall is indicated as *H.* The thickness of the base is indicated as *T_{B}*. The thickness of a sidewall is indicated as *Ts.* The interior angle between a sidewall and the base is indicated as *α*. The exterior angle between a sidewall and the base is indicated as *β*.

The saggar may be a saggar for retaining a powder during calcination. The powder may be a battery electrode material powder such as a battery cathode material powder. For example, the saggar may be for retaining one or more metal oxides, hydroxides, carbonates, sulphates and/or phosphates. For example, the saggar may be for retaining one or more metal oxides, hydroxides, carbonates, sulphates and/or phosphates of lithium, titanium, vanadium, chromium, manganese, iron, cobalt and/or nickel. The saggar may therefore be formed of a material which is resistant to damage when in contact with such powders at elevated temperatures.

### Method of manufacture

The method of manufacturing the saggar comprises pressure casting a slip composition within a mould cavity to form a green saggar body, removing the green saggar body from the mould cavity, and firing the green saggar body to produce a fired saggar body.

It will be appreciated that pressure casting a component comprises applying pressure to (i.e. pressurising) the slip composition within the mould cavity during the moulding process to form the green component body. Pressure casting can therefore be contrasted with unpressurised slip casting.

Since pressure casting comprises forming the green component body from a slip composition (i.e. a liquid slurry), pressure casting can also be contrasted with methods in which green component bodies are formed by pressing dry ceramic powders in a mould cavity.

### Pressure casting

The method may comprise pressure casting the slip composition within the mould cavity as a pressure no less than about 200 kPa, for example, no less than about 250 kPa, or no less than about 300 kPa, or no less than about 400 kPa, or no less than about 500 kPa, or no less than about 501 kPa, or no less than about 600 kPa, or no less than about 700 kPa, or no less than about 800 kPa, or no less than about 900 kPa, or no less than about 1000 kPa, or no less than about 1500 kPa, or no less than about 2000 kPa, or no less than about 2500 kPa, or no less than about 3000 kPa, or no less than about 3500 kPa. The method may comprise pressure casting the slip composition within the mould cavity as a pressure no more than about 4000 kPa, for example, no more than about 3500 kPa, or no more than about 3500 kPa, or no more than about 3000 kPa, or no more than about 2500 kPa, or no more than about 2000 kPa. The method may comprise pressure casting the slip composition within the mould cavity as a pressure from about 200 kPa to about 4000 kPa, for example, from about 200 kPa to about 3000 kPa, or from about 200 kPa to about 2000 kPa, or from about 200 kPa to about 1000 kPa, or from about 200 kPa to about 500 kPa, or from about 501 kPa to about 4000 kPa, or from about 1000 kPa to about 4000 kPa, or from about 2000 kPa to about 4000 kPa, or from about 3000 kPa to about 4000 kPa, or from about 2000 kPa to about 3000 kPa.

The pressure casting may be low-pressure casting. Low-pressure casting may be defined as pressure casting in which the slip composition is cast at a pressure from about 200 kPa to about 5000 kPa.

The pressure casting may be high-pressure casting. High-pressure casting may be defined as pressure casting in which the slip composition is cast at a pressure from about 501 kPa to about 4000 kPa, for example from about 1000 kPa to about 4000 kPa, or from about 2000 kPa to about 4000 kPa.

It will be appreciated that the mould cavity is the internal space of a mould to be filled with the slip composition. The mould cavity is typically surrounded by one or more mould walls. The one or more mould walls typically define the interior shape of the mould cavity and thus also the shape of the green saggar body.

The mould may be a multi-part mould. That is to say, the complete mould may be formed by bringing together two or more separate mould parts, each mould part defining one or more portions of the interior of the mould cavity. The two or more mould parts may be held together (thus forming the mould cavity) during use, for example, using mechanical locking mechanisms, pneumatic pressure, hydraulic pressure, etc.

During pressure casting, the slip composition is injected under pressure through an inlet orifice into the mould cavity. Filtrate (i.e. liquid) is typically removed from the mould cavity (i.e. from the slip composition within the mould cavity) and the concentration of solids (i.e. a solid component of the slip composition) within the mould cavity (i.e. in the slip composition within the mould cavity) increases. The pressure casting is carried out until the (e.g. compressed) solids content of the mould cavity is sufficiently high that the green saggar body is produced and can be removed safely from the mould without substantial damage or disintegration.

Filtrate may be removed from the mould cavity via one or more mould walls of the mould cavity. The mould wall(s) may comprise (e.g. be formed from or consist of) a porous or semi-porous material, such as plaster or porous or semi-porous resin. The mould wall(s) may therefore absorb filtrate from the mould cavity and/or allow filtrate to pass therethrough.

Additionally or alternatively, filtrate may be removed from the mould cavity via an outlet. The outlet may be formed in the one or more mould walls, for example, at one end (e.g. a lower end) of the mould cavity. The outlet may be configured to impede passage of a solid component of the slip composition therethrough. The outlet may therefore be configured to function as a filter, allowing filtrate (i.e. liquid) to pass therethrough but impeding passage of the solid component.

In embodiments in which filtrate is removed from the mould cavity via an outlet, the mould wall(s) may comprise (e.g. be formed from or consist of) non-porous material, such as non-porous resin.

In some examples (for example, using low-pressure casting), the pressure casting may be carried out for no less than about 10 minutes, for example, no less than about 20 minutes, or no less than about 30 minutes, or no less than about 40 minutes. In some examples (for example, using low-pressure casting), the pressure casting may be carried out for no more than about 60 minutes, for example, no more than about 50 minutes, or no more than about 40 minutes, or no more than about 30 minutes. In some examples (for example, using low-pressure casting), the pressure casting may be carried out for from about 10 minutes to about 60 minutes, for example, from about 20 minutes to about 60 minutes, or from about 30 minutes to about 60 minutes, or from about 20 minutes to about 40 minutes, or from about 20 minutes to about 30 minutes.

In some examples (for example, using high-pressure casting), the pressure casting may be carried out for no less than about 30 seconds, for example, no less than about 1 minute, or no less than about 2 minutes, or no less than about 3 minutes. In some examples (for example, using high-pressure casting), the pressure casting may be carried out for no more than about 10 minutes, for example, no more than about 8 minutes, or no more than about 6 minutes, or no more than about 5 minutes, or no more than about 4 minutes, or no more than about 3 minutes. In some examples (for example, using high-pressure casting), the pressure casting may be carried out for from about from about 30 seconds to about 10 minutes, for example, from about 1 minute to about 8 minutes, or from about 1 minute to about 6 minutes, or from about 1 minute to about 5 minutes, or from about 2 minutes to about 10 minutes, or from about 2 minutes to about 5 minutes, or from about 2 minutes to about 4 minutes, or from about 2 minutes to about 3 minutes.

Pressure may be applied to the slip composition using any suitable means known in the art. For example, pressure may be applied to the slip composition using mechanical, hydraulic or pneumatic means. The slip composition within the mould cavity may be pressurised directly, for example, by pumping the slip composition into the mould cavity under pressure and maintaining the pressure of the slip composition at a point of entry into the mould cavity during the casting process. Additionally or alternatively, pressure may be applied (e.g. hydraulically) to the mould wall(s).

The method comprises removing the green saggar body from the mould cavity following pressure casting. The green saggar body is also known as a saggar body preform. Removing the green saggar body may comprise separating mould parts from one another and/or from the green saggar body. Mould parts may be separated from one another and/or from the green saggar body by applying pressure (e.g. air or water pressure) and/or by applying vacuum.

Following removal of the green saggar body from the mould cavity, one or more drying setters (e.g. setter plates) may be applied.

The method may comprise drying the green saggar body. The green saggar body can be dried with every suitable method, for example, at room temperature, or at temperature between 40°C and 100°C, for example at about 60°C. The green saggar body may be dried for a period of no less than 2 hours, or no less than 6 hours, or no less than 12 hours, or no less than 18 hours, or no less than 24 hours. The green saggar body may be considered as dried when its moisture content is no more than 0.5 wt.% based on the total weight of the green saggar body.

### Slip composition

It will be appreciated that a slip is a slurry used in the production of ceramics. Accordingly, the slip composition used in the method may comprise one or more phyllosilicate minerals and water.

The phyllosilicate minerals include (but are not limited to) kaolin, calcined kaolin, smectite, illite, clay, calcined clay, talc, vermiculite, palygorskite and/or sepiolite.

Accordingly, the one or more phyllosilicate minerals in the slip composition may comprise: kaolin, calcined kaolin, smectite, illite, clay, calcined clay, talc, vermiculite, palygorskite, sepiolite, and/or any combination thereof.

The one or more phyllosilicate minerals in the slip composition may also comprise silicoaluminous chamotte, which is a blend of silicoaluminous mineral fired at high temperature (at least 1400°C), for example, a blend of clay and kaolin fired.

The slip composition may comprise components in addition to one or more phyllosilicate minerals and water.

For example, the slip composition may one or more mineral components other than phyllosilicate minerals.

The slip composition may comprise alumina (Al₂O₃). The slip composition may comprise calcined alumina and/or uncalcined alumina.

The slip composition may comprise corundum, i.e. a crystalline mineral form of alumina which may also comprise trace amounts of iron, titanium, vanadium and/or chromium.

The slip composition may comprise magnesium carbonate (MgCO₃). The slip composition may comprise magnesite, i.e. a mineral form of magnesium carbonate which may also comprise trace amounts of iron, manganese, cobalt and/or nickel.

The slip composition may comprise mullite and/or kyanite. Mullite, also known as porcelainite, has chemical formula Al₆Si₂O₁₃ and occurs naturally or can be manufactured, for example, by calcining kaolinite or kyanite. Kyanite is a high pressure polymorph of andalusite and sillimanite.

The slip composition may comprise a spinel. Spinels define a class of minerals of general formula AB₂X₄ which crystallise in the cubic crystal system, where X anions are arranged in a cubic close-packed lattice and A and B cations occupy octahedral and/or tetrahedral sites. Spinels include the specific mineral known as 'spinel', i.e. MgAl₂O₄. Accordingly, the slip composition may comprise spinel (MgAl₂O₄). The spinel may be naturally occurring or manufactured. For example, the spinel may be fused magnesium-aluminate spinel.

Accordingly, the slip composition may comprise the one or more phyllosilicate minerals, water, and one or more of: alumina, for example, calcined alumina; corundum; magnesium carbonate, for example, magnesite; mullite; kyanite; a spinel; and/or any combination thereof.

The slip composition may comprise one or more phyllosilicate minerals, mullite and water.

The slip composition may comprise one or more phyllosilicate minerals, alumina and/or corundum, mullite and water.

The slip composition may comprise one or more of kaolin, talc, mullite and water.

The slip composition may be selected so as to produce cordierite and mullite on firing, which will provide a good chemical resistance to the saggar at a reasonable cost.

The slip composition may comprise one or more additives. For example, the slip composition may comprise a deflocculant and/or a binder. For example, the slip composition may comprise a polycarboxylic acid (e.g. DOLAPIX PC 67 available from Zschimmer & Schwarz GmbH Co., Germany), a polysaccharide (e.g. COLLSTAB^{®} W-60 gellan gum, available from COLLTEC GmbH & Co., Germany) and/or a lignosulfonate (e.g. LignoBond^{®} DD available from Borregaard, Norway).

Alternatively, the slip composition may comprise no less than about 70 wt. %, for example, no less than about 73 wt. %, or no less than about 75 wt. %, or no less than about 78 wt. %, or no less than about 80 wt. % phyllosilicate, based on the total dry weight of the slip composition. The slip composition may comprise no more than about 90 wt. %, for example, no more than about 87 wt. %, or no more than about 85 wt. %, phyllosilicate minerals, based on the total dry weight of the slip composition. The slip composition may comprise from about 70 wt. % to about 90 wt. %, or from about 73 wt. % to about 87 wt. %, or from about 75 wt. % to about 87 wt. %, or from about 78 wt. % to about 87 wt. %, or from about 78 wt. % to about 85 wt. %, or from about 80 wt. % to about 85 wt.% phyllosilicate minerals, based on the total dry weight of the slip composition.

We have found that advantageously, using pressure casting in the range of from 200 kPa to 4000 kPa, the concentration of alumina may be reduced in the slip without this having a detrimental effect on the mechanical performance of the fired saggar. As alumina significantly contributes to the weight of the saggar, this means that the weight of the saggar may be reduced.

The slip composition may comprise no less than about 1 wt. %, for example, no less than about 2 wt. %, or no less than about 3 wt. %, or no less than about 4 wt. %, or no less than about 5 wt. %, or no less than about 10 wt. %, or no less than about 12 wt. % alumina (for example calcined alumina), based on the total dry weight of the slip composition. The slip composition may comprise no more than about no more than about 30 wt. %, or no more than about 25 wt. %, or no more than about 20 wt. %, or no more than about 15 wt. %, or no more than about 10 wt. %, or no more than about 5 wt. %, alumina (for example calcined alumina), based on the total dry weight of the slip composition. The slip composition may comprise from about 1 wt. % to about 30 wt. %, for example, from about 1 wt. % to about 25 wt. %, or from about 1 wt. % to about 20 wt. %, or from about 1 wt. % to about 15 wt. %, or from about 1 wt. % to about 10 wt. %, or from about 1 wt. % to about 5 wt. %, alumina (for example calcined alumina), based on the total dry weight of the slip composition.

The slip composition may not comprise any corundum. Alternatively, the slip composition may comprise corundum.

The slip composition may comprise no less than about 5 wt. %, for example, no less than about 10 wt. %, or no less than about 15 wt. % corundum, based on the total dry weight of the slip composition. The slip composition may comprise no more than about no more than about 30 wt. %, or no more than about 20 wt. %, or no more than about 10 wt. % corundum, based on the total dry weight of the slip composition. The slip composition may comprise from about 5 wt. % to about 30 wt. %, for example, from about 5 wt. % to about 20 wt. %, or from about 5 wt. % to about 10 wt. % corundum based on the total dry weight of the slip composition.

The slip composition may not comprise any mullite. The slip composition may not comprise any kyanite. Alternatively, the slip composition may comprise mullite and/or kyanite. The slip composition may comprise no less than about 5 wt. %, for example, no less than about 8 wt. %, or no less than about 10 wt. %, or no less than about 12 wt. %, mullite and/or kyanite, based on the total dry weight of the slip composition. The slip composition may comprise no more than about 30 wt. %, or no more than about 25 wt. %, or no more than about 20 wt. %, or no more than about 17 wt. %, or no more than about 15 wt. %, mullite and/or kyanite, based on the total dry weight of the slip composition. The slip composition may comprise from about 5 wt. % to about 30 wt. %, or from about 5 wt. % to about 25 wt. %, from about 5 wt. % to about 20 wt. %, or from about 5 wt. % to about 17 wt. %, or from about 5 wt. % to about 15 wt. %, mullite and/or kyanite, based on the total dry weight of the slip composition.

The slip composition may not comprise spinel. Alternatively, the slip composition may comprise spinel. The slip composition may comprise no less than about 10 wt. %, for example, no less than about 15 wt. %, or no less than about 20 wt. %, or no less than about 22 wt. %, spinel, based on the total dry weight of the slip composition. The slip composition may comprise no more than about 35 wt. %, for example, no more than about 30 wt. %, or no more than about 28 wt. %, or no more than about 26 wt. %, spinel, based on the total dry weight of the slip composition. The slip composition may comprise from about 10 wt. % to about 35 wt. %, or from about 10 wt. % to about 30 wt. %, or from about 10 wt. % to about 28 wt. %, or from about 10 wt. % to about 26 wt. %, or from about 15 wt. % to about 35 wt. %, or from about 15 wt. % to about 30 wt. %, or from about 15 wt. % to about 28 wt. %, or from about 15 wt. % to about 26 wt. %, or from about 20 wt. % to about 35 wt. %, or from about 20 wt. % to about 30 wt. %, or from about 20 wt. % to about 28 wt. %, or from about 20 wt. % to about 26 wt. %, or from about 22 wt. % to about 35 wt. %, or from about 22 wt. % to about 30 wt. %, or from about 22 wt. % to about 28 wt. %, or from about 22 wt. % to about 26 wt. %, spinel, based on the total dry weight of the slip composition.

The slip composition may comprise from about 0.01 wt. % to about 1.5 wt. %, for example, from about 0.01 wt. % to about 1.0 wt. %, or from about 0.01 wt. % to about 0.9 wt. %, or from about 0.01 wt. % to about 0.8 wt. %, or from about 0.01 wt. % to about 0.5 wt. %, or from about 0.01 wt. % to about 0.4 wt. %, or from about 0.01 wt. % to about 0.3 wt. %, or from about 0.01 wt. % to about 0.2 wt. %, or from about 0.01 wt. % to about 0.1 wt. % deflocculant and/or binder, based on the total dry weight of the slip composition.

The slip composition may comprise from about 8 wt. % to about 30 wt. %, for example, from about 8 wt. % to about 25 wt. %, or from about 10 wt. % to about 25 wt. %, or from about 12 wt. % to about 18 wt. %, or from about 18 wt. % to about 25 wt. %, or from about 20 wt. % to about 22 wt. % water, based on the total dry weight of the slip composition.

The water and deflocculant and/or binder content of the slip composition can be adjusted to achieve a desired consistency (e.g. defined in terms of viscometric parameters such as thixotropy) suitable for pressure casting.

The slip composition may comprise: from about 70 wt. % to about 90 wt. %, for example, from about 75 wt. % to about 85 wt. %, phyllosilicate minerals; from about 1 wt. % to about 10 wt. %, for example, from about 2 wt. % to about 8 wt. %, alumina (e.g. calcined alumina); from about 5 wt. % to about 20 wt. %, for example, from about 10 wt. % to about 29 wt. %, mullite, based on the total dry weight of the slip composition.

The slip composition may have a density from about 1500 g/L to about 3000 g/L, for example, from about 1800 g/L to about 3000 g/L, or from about 2000 g/L to about 3000 g/L or from about 2000 g/L to about 2100 g/L, or from about 2500 g/L to about 2700 g/L.

The slip composition may have a thixotropy, as measured by Gallenkamp universal torsion viscometry with a first viscosity (i.e. overswing) measurement taken immediately after stirring and a second viscosity (i.e. overswing) measurement taken 5 minutes after stirring, from about 15 °G to about 30 °G, for example, from about 15 °G to about 27.5 °G, or from about 15 °G to about 25 °G, or from about 15 °G to about 22.5 °G, or from about 15 °G to about 20 °G, or from about 15 °G to about 17.5 °G, or from about 17.5 °G to about 30 °G, or from about 17.5 °G to about 27.5 °G, or from about 17.5 °G to about 25 °G, or from about 17.5 °G to about 22.5 °G, or from about 17.5 °G to about 20 °G, or from about 20 °G to about 30 °G, or from about 20 °G to about 27.5 °G, or from about 20 °G to about 25 °G, or from about 20 °G to about 22.5 °G, or from about 22.5 °G to about 30 °G, or from about 22.5 °G to about 27.5 °G, or from about 22.5 °G to about 25 °G, or from about 25 °G to about 30 °G, or from about 25 °G to about 27.5 °G, or from about 27.5 °G to about 30 °G.

The slip composition may have a moisture content from about 10 wt. % to about 30 wt. %, for example, from about 10 wt. % to about 25 wt. %, or from about 10 wt. % to about 20 wt. %, or from about 10 wt. % to about 15 wt. %, or from about 15 wt. % to about 30 wt. %, or from about 15 wt. % to about 25 wt. %, or from about 15 wt. % to about 20 wt. %, or from about 20 wt. % to about 30 wt. %, or from about 20 wt. % to about 25 wt. %, or from about 25 wt. % to about 30 wt. % based on the total weight of the slip composition.

### Firing

The method comprises firing the green saggar body (also known as the preform) to produce a fired saggar body.

The green saggar body may be fired in any suitable type of kiln or furnace known in the art.

The green saggar body may be fired at a temperature no less than about 1200 °C, or no less than about 1300 °C, or no less than about 1325 °C, or no less than about 1350 °C. The green saggar body may be fired at a temperature no greater than about 1500 °C, for example, no greater than about 1450 °C, or no greater than about 1400 °C. The green saggar body may be fired at a temperature from about 1200 °C to about 1500 °C, for example, from about 1200 °C to about 1400 °C, or from about 1300 °C to about 1400 °C.

The green saggar body may be fired for no less than about 12 hours, for example, no less than about 15 hours, or no less than about 18 hours, or no less than about 21 hours, or no less than about 24 hours, or no less than about 27 hours, or no less than 30 hours.

### Fired saggar body composition

It will be appreciated that, during firing, components of the slip composition from which the green saggar body is formed react to form a ceramic material which, on cooling, defines the fired saggar body.

The chemical composition of the fired saggar body can be determined by XRD.

The saggar (i.e. the fired saggar body) may comprise from about 5 wt. % to about 60 wt. %, for example, from about 45 wt. % to about 60 wt. %, or from about 45 wt. % to about 55 wt. %, or from about 45 wt. % to about 50 wt. %, or from about 50 wt. % to about 60 wt. %, or from about 50 wt. % to about 55 wt. %, or from about 55 wt. % to about 60 wt. %, SiO₂, based on the total weight of the saggar.

The saggar, i.e. the fired saggar body, may comprise from about 10 wt. % to about 60 wt. %, for example, from about 10 wt. % to about 55 wt. %, or from about 10 wt. % to about 50 wt. %, or from about 10 wt. % to about 45 wt. %, or from about 20 wt. % to about 60 wt. %, or from about 20 wt. % to about 55 wt. %, or from about 20 wt. % to about 50 wt. %, or from about 20 wt. % to about 45 wt. %, or from about 30 wt. % to about 60 wt. %, or from about 30 wt. % to about 55 wt. %, or from about 30 wt. % to about 50 wt. %, or from about 30 wt. % to about 45 wt. % Al₂O₃, based on the total weight of the saggar.

The saggar, i.e. the fired saggar body, typically comprises SiO₂ and Al₂O₃.

In addition to SiO₂ and Al₂O₃, the saggar, i.e. the fired saggar body, may comprise one or more of Fe₂O₃, TiO₂, CaO, MgO, K₂O and Na₂O.

The saggar, i.e. the fired saggar body may comprise no more than about 2.0 wt. %, for example, no more than about 1.5 wt. %, or no more than about 1.0 wt. %, or no more than about 0.5 wt. %, Fe₂O₃, based on the total weight of the saggar. The saggar, i.e. the fired saggar body may comprise no less than about 0.1 wt. % Fe₂O₃, based on the total weight of the saggar. The saggar, i.e. the fired saggar body may comprise from about 0.1 wt. % to about 2.0 wt. %, for example, from about 0.1 wt. % to about 1.5 wt. %, or from about 0.1 wt. % to about 1.0 wt. %, or from about 0.1 wt. % to about 0.5 wt. %, Fe₂O₃, based on the total weight of the saggar.

The saggar, i.e. the fired saggar body may comprise no more than about 1.0 wt. %, for example, no more than about 0.5 wt. %, or no more than about 0.1 wt. %, TiO₂, based on the total weight of the saggar. The saggar, i.e. the fired saggar body may comprise no less than about 0.05 wt. % TiO₂, based on the total weight of the saggar. The saggar, i.e. the fired saggar body may comprise from about 0.05 wt. % to about 1.0 wt. %, for example, from about 0.05 wt. % to about 0.5 wt. %, or from about 0.05 wt. % to about 0.1 wt. %, TiO₂, based on the total weight of the saggar.

The saggar, i.e. the fired saggar body may comprise no more than about 1.0 wt. %, for example, no more than about 0.5 wt. %, or no more than about 0.1 wt. %, CaO, based on the total weight of the saggar. The saggar, i.e. the fired saggar body may comprise no less than saggar, i.e. the fired saggar body material may comprise from about 0.01 wt. % to about 1.0 wt. %, for example, from about 0.01 wt. % to about 0.5 wt. %, or from about 0.01 wt. % to about 0.1 wt. %, or from about 0.05 wt. % to about 1.0 wt. %, or from about 0.05 wt. % to about 0.5 wt. %, or from about 0.05 wt. % to about 0.1 wt. %, CaO, based on the total weight of the saggar.

The saggar, i.e. the fired saggar body may comprise no less than about 4 wt. %, for example, no less than about 5 wt. %, or no less than about 6 wt. %, or no less than about 7 wt. %, or no less than about 8 wt. %, or no more than about 9 wt. %, MgO, based on the total weight of the saggar. The saggar, i.e. the fired saggar body may comprise no more than about 10 wt. %, for example, no more than about 9 wt. %, or no more than about 8 wt. %, or no more than about 7 wt. %, or no more than about 6 wt. %, or no more than about 5 wt. %, MgO, based on the total weight of the saggar. The saggar, i.e. the fired saggar body may comprise from about 4 wt. % to about 10 wt. %, for example, from about 4 wt. % to about 9 wt. %, or from about 4 wt. % to about 8 wt. %, or from about 4 wt. % to about 7 wt. %, or from about 4 wt. % to about 6 wt. %, or from about 4 wt. % to about 5 wt. %, or from about 5 wt. % to about 10 wt. %, or from about 5 wt. % to about 9 wt. %, or from about 5 wt. % to about 8 wt. %, or from about 5 wt. % to about 7 wt. %, or from about 5 wt. % to about 6 wt. %, or from about 6 wt. % to about 10 wt. %, or from about 6 wt. % to about 9 wt. %, or from about 6 wt. % to about 8 wt. %, or from about 6 wt. % to about 7 wt. %, or from about 7 wt. % to about 10 wt. %, or from about 7 wt. % to about 9 wt. %, or from about 7 wt. % to about 8 wt. %, or from about 8 wt. % to about 10 wt. %, or from about 8 wt. % to about 9 wt. %, or from about 9 wt. % to about 10 wt. %, MgO, based on the total weight of the saggar.

The saggar, i.e. the fired saggar body may comprise no more than about 2.0 wt. %, for example, no more than about 1.5 wt. %, or no more than about 1.0 wt. %, or no more than about 0.5 wt. %, or no more than about 0.1 wt. %, K₂O, based on the total weight of the saggar. The saggar, i.e. the fired saggar body may comprise no less than about 0.01 wt. % K₂O, based on the total weight of the saggar. The saggar, i.e. the fired saggar body may comprise from about 0.01 wt. % to about 2.0 wt. %, for example, from about 0.01 wt. % to about 1.5 wt. %, or from about 0.01 wt. % to about 1.0 wt. %, or from about 0.01 wt. % to about 0.5 wt. %, or from about 0.01 wt. % to about 0.1 wt. %, K₂O, based on the total weight of the saggar.

The saggar, i.e. the fired saggar body may comprise no more than about 0.5 wt. %, for example, no more than about 0.1 wt. %, or no more than about 0.05 wt. %, Na₂O, based on the total weight of the saggar. The saggar, i.e. the fired saggar body may comprise no less than about 0.01 wt. % Na₂O, based on the total weight of the saggar. The saggar, i.e. the fired saggar body may comprise from about 0.01 wt. % to about 0.5 wt. %, for example, from about 0.01 wt. % to about 0.1 wt. %, or from about 0.01 wt. % to about 0.05 wt. %, Na₂O, based on the total weight of the saggar.

The saggar, i.e. the fired saggar body may comprise about 20 to about 40 wt.% mullite and about 35 wt.% to about 45% cordierite; and optionally about 5 to 25 wt.% spinel, based on the total weight of the saggar.

The saggar, i.e. the fired saggar body may comprise about 20 to about 40 wt.% mullite and about 35 wt.% to about 45% cordierite; and optionally about 5 to 15 wt.% spinel, based on the total weight of the saggar.

The saggar (i.e. the fired saggar body) may have a modulus of rupture (MOR) no less than about 18 MPa, for example, no less than about 20 MPa, or no less than about 21 MPa, or no less than about 22 MPa, or no less than about 23 MPa, or no less than about 24 MPa, or no less than about 25 MPa, or no less than about 26 MPa, or no less than about 27 MPa, or no less than about 28 MPa. The saggar (i.e. the fired saggar body) may have a modulus of rupture (MOR) from about 18 MPa to about 35 MPa, for example, from about 20 MPa to about 35 MPa, or from about 21 MPa to about 35 MPa, or from about 22 MPa to about 35 MPa, or from about 23 MPa to about 35 MPa, or from about 24 MPa to about 35 MPa, or from about 25 MPa to about 35 MPa. MOR may be measured by a three-point bending test according to BS EN 993-6 1999. A standard bar of size 125 × 20 × 20 mm is cut out of the fired specimen for testing. The measurement is carried out using an MTS QTEST/10 device.

The saggar (i.e. the fired saggar body) may have a water absorption from about 5 % to about 20 %, for example, from about 7 % to about 20 %, or from about 10 % to about 20 %, or from about 7 % to about 16 %, or from about 8 % to about 15 %, or from about 9 % to about 11 %, or from about 8 % to about 10 %, or from about 9 % to about 10 %, or from about 13 % to about 16 %, or from about 13 % to about 15 %, or from about 14 % to about 15 %, based on the total weight of the saggar. Water absorption may be measured according to BS EN 993-1.

The saggar (i.e. the fired saggar body) may have a density from about 1.6 g/cm³ to about 3.0 g/cm³, for example, from about 1.6 g/cm³ to about 2.9 g/cm³, from about 1.6 g/cm³ to about 2.8 g/cm³, or from about 1.6 g/cm³ to about 2.7 g/cm³, or from about 1.6 g/cm³ to about 2.6 g/cm³, or from about 1.6 g/cm³ to about 2.5 g/cm³, or from about 1.6 g/cm³ to about 2.4 g/cm³, or from about 1.6 g/cm³ to about 2.3 g/cm³, or from about 1.6 g/cm³ to about 2.2 g/cm³, or from about 1.6 g/cm³ to about 2.1 g/cm³, or from about 1.6 g/cm³ to about 2.0 g/cm³, or from about 1.7 g/cm³ to about 3.0 g/cm³, or from about 1.8 g/cm³ to about 3.0 g/cm³, or from about 1.9 g/cm³ to about 3.0 g/cm³, or from about 2.0 g/cm³ to about 3.0 g/cm³, or from about 2.1 g/cm³ to about 3.0 g/cm³, or from about 2.2 g/cm³ to about 3.0 g/cm³, or from about 2.3 g/cm³ to about 3.0 g/cm³, or from about 2.4 g/cm³ to about 3.0 g/cm³, or from about 2.5 g/cm³ to about 3.0 g/cm³, or from about 1.8 g/cm³ to about 2.8 g/cm³, or from about 1.8 g/cm³ to about 2.0 g/cm³, or from about 1.9 g/cm³ to about 2.1 g/cm³, or from about 2.5 g/cm³ to about 2.7 g/cm³, or from about 2.6 g/cm³ to about 2.7 g/cm³. Density may be measured according to BS EN 993-1.

The saggar (i.e. the fired saggar body) may have a porosity from about 16 % to about 35 %, for example, or from about 20 % to about 35 %, or from about 20 % to about 30 %, or from about 22 % to about 30 %, or from about 23 % to about 30 %, or from about 24 % to about 30 %, or from about 24 % to about 29%, based on the total volume of the saggar. Porosity may be measured according to BS EN 993-1.

The saggar (i.e. the fired saggar body) may have a coefficient of thermal expansion from about 1.5 × 10⁻⁶ K⁻¹ to about 8.0 × 10⁻⁶ K⁻¹, for example, from about 1.5 × 10⁻⁶ K⁻¹ to about 7.5 × 10⁻⁶ K⁻¹, or from about 1.5 × 10⁻⁶ K⁻¹ to about 3.0 × 10⁻⁶ K⁻¹, or from about 1.5 × 10⁻⁶ K⁻¹ to about 2.5 × 10⁻⁶ K⁻¹, or from about 2.0 × 10⁻⁶ K⁻¹ to about 3.0 × 10⁻⁶ K⁻¹, or from about 2.0 × 10⁻⁶ K⁻¹ to about 2.5 × 10⁻⁶ K⁻¹, or from about 5.5 × 10⁻⁶ K⁻¹ to about 7.0 × 10⁻⁶ K⁻¹, or from about 6.0 × 10⁻⁶ K⁻¹ to about 7.5 × 10⁻⁶ K⁻¹, or from about 6.0 × 10⁻⁶ K⁻¹ to about 7.0 × 10⁻⁶ K⁻¹, or from about 6.0 × 10⁻⁶ K⁻¹ to about 6.5 × 10⁻⁶ K⁻¹,. The coefficient of thermal expansion may be measured according to EN 821-1 1998 using a Netsch DIL 402 PC/4 dilatometer with a maximum operating temperature of 1600 °C.

It will be understood that the invention is not limited to the embodiments described above and various modifications and improvements can be made without departing from the concepts described herein. Except where mutually exclusive, any of the features may be employed separately or in combination with any other features and the disclosure extends to and includes all combinations and sub-combinations of one or more features described herein.

### EXAMPLES

### Example 1

Two ceramic slips S1 and S2 were prepared having the compositions shown in Tables 1 and 2 respectively. A third (comparative) ceramic slip S3, with a high alumina content, was also prepared. The slips were mixed in a conventional mixing machine with a shear plunger. The water and deflocculant contents were determined so as to provide viscometric parameters suitable for casting.

In the following tables,
Kaolin: kaoPearl CNL 30 available from Imerys
Clay: RR40,BS5 and Hymod excelsior available from Imerys
Talc: Talc 2C available from Imerys
Calcined alumina: Alo G4 4G available from Mal
Mullite: Virgina Mullte -100 available from Kyanite Mining corporation
Chamotte: Molochite -30 available from Imerys
Spinelle: F27 -100 available from Motim Fused cast refractories
Corundum: Korund ESK-A -1 available from Motim
Lignosulfate is Lignobond DD lignosulfonate available from Borregaard
Polycarboxylic acid is DOLAPIX PC 67 available from Zschimmer & Schwarz GmbH Co

**Table 1 - S1 composition**

| | |
|---|---|
| Kaolin | 21.7 wt. % |
| Talc | 18.5 wt. % |
| Calcined alumina | 4.6 wt. % |
| Silicoaluminous Chamotte | 42.1 wt. % |
| Mullite | 13.1 wt. % |
| Total | 100 wt. % |
| Polycarboxylic acid | 0.2 wt. % |
| Water | 19.7 wt. % |

| | |
|---|---|
| Water and polycarboxylic acid are added based on the total weight of the dry materials. | |

**Table 2 - S2 composition**

| | |
|---|---|
| Kaolin | 22.5 wt. % |
| Talc | 22.5 wt. % |
| Calcined alumina | 4.0 wt. % |
| Silico aluminous Chamotte | 38.5 wt. % |
| Mullite | 12.5 wt. % |
| Total | 100 wt.% |
| Polycarboxylic acid | 0.1 wt. % |
| Water | 21.0 wt. % |

| | |
|---|---|
| Water and polycarboxylic acid are added based on the total weight of the dry materials. | |

For each slip composition, the following properties were measured: the density; the deviation angle at 0 min, at 5 min as measured by Gallenkamp universal torsion viscometry; the thixotropy which is the difference between the deviation angle at 0 min and the deviation angle at 5 min. The results are shown in Table 4.

**Table 3.**

| | **S1** | **S2** |
|---|---|---|
| Density (g/L) | 2054 | 2036 |
| Gallenkamp 0 min. (°G) | 310 | 340 |
| Gallenkamp 5 min. (°G) | 291 | 322 |
| Thixotropy (°G) | 19 | 18 |

Three dry ceramic pressing compositions P1 to P3 were also prepared having the compositions shown in Tables 4 to 6 respectively.

**Table 4 - P1 composition**

| | |
|---|---|
| Clay | 19.0 wt. % |
| Calcined alumina | 13.0 wt. % |
| Spinel | 25.0 wt. % |
| Corundum | 43.0 wt. % |

**Table 5 - P2 composition**

| | |
|---|---|
| Clay | 21.0 wt. % |
| Calcined alumina | 13.0 wt. % |
| Spinel | 27.0 wt. % |
| Corundum | 39.0 wt. % |

**Table 6 - P3 composition**

| | |
|---|---|
| Clay | 28.0 wt. % |
| Talc | 24.0 wt. % |
| Calcined alumina | 5.0 wt. % |
| Mullite | 5.0 wt. % |
| Silicoaluminous Chamotte | 38.0 wt. % |
| Lignosulfonate | 0.40 wt. % |

For each pressing composition, the following property was measured: the moisture content. Details of the measurement method are provided elsewhere in the description. The results are shown in Table 7.

**Table 7.**

| | **P1** | **P2** | **P3** |
|---|---|---|---|
| **Moisture content (%)** | 4.4 | 4.5 | 7.3 |

Two saggars were prepared using slip compositions S1 and S2 with a high-pressure casting process. In each case, the high-pressure casting was carried out using a resin mould fitted into a high-pressure casting machine with a movable top, fixed bottom frame and two movable side parts. The mould was closed by applying a maximum vertical hydraulic pressure of 240 bar and a maximum horizontal hydraulic pressure of 160 bar. The casting was carried out with an operating pressure of 35 bar (3500 kPa). Each saggar took around 3 minutes to cast. Following casting, greens were demoulded and dried at 60°C during 24 hours, fired in a kiln at a temperature of 1350°C for 24 hours, and then allowed to cool. A comparative saggar with an alumina content of about 80 wt.% has also been prepared in the same conditions.

For each fired saggar, the following properties were measured: the modulus of rupture (MOR); the water absorption; the density; the porosity; the coefficient of thermal expansion (CTE) as measured by Netzsch DIL 402CD; and the chemical composition. Details of the measurement methods are provided elsewhere in the description. The results are shown in Table 8.

**Table 8.**

| **Slip** | **S1** | **S2** |
|---|---|---|
| **MOR (MPa)** | 28 | 19 |
| **Water absorption (%)** | 15 | 16 |
| **Density (g/cm³)** | 1.90 | 1.87 |
| **Porosity (%)** | 28 | 29 |
| **CTE (×10⁻⁶ K⁻¹)** | 2.93 | 2.17 |
| **SiO₂ (%)** | 50.1 | 48.3 |
| **Al₂O₃ (%)** | 40.2 | 40.8 |
| **Fe₂O₃ (%)** | 1.0 | 0.8 |
| **TiO₂ (%)** | 0.3 | 0.2 |
| **CaO (%)** | 0.3 | 0.1 |
| **MgO (%)** | 6.9 | 8.8 |
| **K₂O (%)** | 1.0 | 0.9 |
| **Na₂O (%)** | <0.1 | <0.1 |
| **Others (%)** | 0.1 | 0.1 |
| **Thickness** | 11 mm | 11 mm |
| **Weight** | 3.8 kg | 3.6 kg |
| **Mullite (wt.%)** | About 35 | About 35 |
| **Cordierite (wt.%)** | About 40 | About 40 |
| **Spinel (wt.%)** | 0 | About 10 |

The comparative saggar has a similar MOR but a weight of more than 5 kg and a density of 2.66 g/cm³.

Two saggars were prepared using slip compositions S1 and S2 with a low-pressure casting process. In each case, the low-pressure casting was carried out using a plaster mould fitted into a low-pressure casting machine with steel frames, a movable top and bottom frame, and a fixed central frame. Vertical movement was mechanical and horizontal movement was mechanical and pneumatic. The mould was closed by mechanical locking and additional pneumatic pressure in the vertical position. In the horizontal position, the mould was closed hydraulically. The casting was carried out with an operating pressure of 2 bar (200 kPa). Each saggar took around 20 to 30 minutes to cast. Following casting, greens were demoulded and dried at 60°C during 24 hours, fired in a kiln at a temperature of 1350°C for 24 hours, and then allowed to cool.

A comparative saggar with an alumina content of about 80 wt.% has also been prepared in the same conditions.

For each fired saggar, the following properties were measured: the modulus of rupture (MOR); the water absorption; the density; the porosity; the coefficient of thermal expansion (CTE); and the chemical composition. Details of the measurement methods are provided elsewhere in the description. The results are shown in Table 9.

**Table 9.**

| **Slip** | **S1** | **S2** |
|---|---|---|
| **MOR (MPa)** | 29 | 21 |
| **Water absorption (%)** | 14 | 15 |
| **Density (g/cm³)** | 1.93 | 1.92 |
| **Porosity (%)** | 27 | 28 |
| **CTE (×10⁻⁶ K⁻¹)** | 3.21 | 2.56 |
| **SiO₂ (%)** | 50.1 | 48.3 |
| **Al₂O₃ (%)** | 40.2 | 40.8 |
| **Fe₂O₃ (%)** | 1.0 | 0.8 |
| **TiO₂ (%)** | 0.3 | 0.2 |
| **CaO (%)** | 0.3 | 0.1 |
| **MgO (%)** | 6.9 | 8.8 |
| **K₂O (%)** | 1.0 | 0.9 |
| **Na₂O (%)** | <0.1 | <0.1 |
| **Others (%)** | 0.1 | 0.1 |
| **Thickness** | 11 mm | 11 mm |
| **Weight** | 3.8 kg | 3.6 kg |
| **Mullite (wt.%)** | About 35 | About 35 |
| **Cordierite (wt.%)** | About 40 | About 40 |
| **Spinel (wt.%)** | 0 | About 10 |

The comparative saggar has a similar MOR but a weight of more than 5 kg and a density of 2.69 g/cm³.

Three saggars were prepared using pressing compositions P1, P2 and P3 with a pressing process.

Following casting, greens were demoulded and dried at 60°C during 24h, fired in a kiln at a temperature of 1350°C for 24 hours, and then allowed to cool.

For each fired saggar, the following properties were measured: the modulus of rupture (MOR); the water absorption; the density; the porosity; the coefficient of thermal expansion (CTE); and the chemical composition. Details of the measurement methods are provided elsewhere in the description. The results are shown in Table 10.

**Table 10.**

| **Pressing composition** | **P1** | **P2** | **P3** |
|---|---|---|---|
| **MOR (MPa)** | 8 | 8 | 17 |
| **Water absorption (%)** | 9 | 10 | 10 |
| **Density (g/cm³)** | 2.68 | 2.60 | 2.06 |
| **Porosity (%)** | 25 | 26 | 21 |
| **CTE (×10⁻⁶ K⁻¹)** | 6.43 | 6.18 | 2.17 |
| **SiO₂ (%)** | 9.3 | 10.3 | 49.3 |
| **Al₂O₃ (%)** | 82.0 | 80.5 | 39.1 |
| **Fe₂O₃ (%)** | 0.3 | 0.3 | 1.3 |
| **TiO₂ (%)** | 0.3 | 0.3 | 0.6 |
| **CaO (%)** | 0.1 | 0.1 | 0.3 |
| **MgO (%)** | 7.8 | 8.2 | 8.2 |
| **K₂O (%)** | 0.1 | 0.1 | 1.0 |
| **Na₂O (%)** | 0.1 | 0.1 | <0.1 |
| **Others (%)** | <0.1 | <0.1 | 0.1 |
| **Thickness** | 13 mm | 13 mm | 13 mm |
| **Weight** | 6.1 kg | 6,0 kg | 4.6 kg |

## Claims

1. A saggar having a body comprising a base and one or more sidewalls, wherein:
the base and the one or more sidewalls have a thickness no greater than about 19 mm, for example, no greater than about 15 mm, or no greater than about 10 mm; and the saggar comprises no more than about 60 wt. % Al₂O₃, preferably, no more than about 50 wt.% Al₂O₃, based on the total weight of the saggar; and:
the saggar has a density from about 1.6 g/cm³ to about 3.0 g/cm³, for example from about 1.8 g/cm³ to about 2.8 g/cm³; and/or
the saggar has a porosity from about 15 % to about 35 %, for example, from about 18 % to about 30 % of the total volume of the saggar, and measured according to BS EN 993-1; and/or
the saggar has a coefficient of thermal expansion from about 1.5 × 10⁻⁶ K⁻¹ to about 5.0 × 10⁻⁶ K⁻¹, for example, from about 2.0 × 10⁻⁶ K⁻¹ to about 4.0 × 10⁻⁶ K⁻¹, measured according to EN 821-1 1998; and/or
the saggar has a modulus of rupture no less than about 15 MPa, for example, no less than about 20 MPa, or no less than about 23 MPa, as measured by a three-point bending test according to BS EN 993-6 1999;
and/or
the ratio of the modulus of rupture of the saggar to the thickness is no less than about 2.0 MPa/mm, for example, no less than about 2.5 MPa/mm and
preferably in the range of from 1.5 MPa/mm to 3.0 MPa/mm.

2. The saggar according to claim 1, wherein the saggar comprises about 20 to about 40 wt.% mullite, about 35 wt.% to about 45% cordierite ; and optionally about 5 to 25 wt.% spinel, based on the total weight of the saggar.

3. The saggar according to claim 2, wherein the saggar comprises about 20 to about 40 wt.% mullite and about 35 wt.% to about 45% cordierite; and optionally about 5 to 15 wt.% spinel, based on the total weight of the saggar.

4. The saggar according to any preceding claim, wherein the saggar:
has a water absorption from about 5 % to about 20 %, for example, from about 8 % to about 15 %, based on the total weight of the saggar; and/or
comprises from about 5 wt. % to about 60 wt. %, for example, from about 40 wt. % to about 60 wt. % SiO₂, based on the total weight of the saggar and from about 30 wt. % to about 60 wt. %, for example, from about 30 wt. % to about 50 wt. % Al₂O₃, based on the total weight of the saggar,
optionally wherein the saggar comprises: no more than about 2.0 wt. %, for example, from about 0.1 wt. % to about 2.0 wt. % Fe₂O₃, based on the total weight of the saggar; no more than about 1.0 wt. %, for example, from about 0.05 wt. % to about 1.0 wt. % TiO₂, based on the total weight of the saggar; no more than about 1.0 wt. %, for example, from about 0.01 wt. % to about 1.0 wt. % CaO, based on the total weight of the saggar; from about 4 wt. % to about 10 wt. % MgO, based on the total weight of the saggar; no more than about 2.0 wt. %, for example, from about 0.01 wt. % to about 2.0 wt. % K₂O, based on the total weight of the saggar; and/or no more than about 0.5 wt. %, for example, from about 0.01 wt. % to about 0.5 wt. % Na₂O, based on the total weight of the saggar.

5. The saggar according to any preceding claim, wherein the saggar is for retaining a powder during calcination, for example, wherein the saggar is for retaining a battery electrode material powder such as a battery cathode material powder, for example, wherein the saggar is for retaining one or more oxides, hydroxides, carbonates, sulphates and/or phosphates of lithium, titanium, vanadium, chromium, manganese, iron, cobalt and/or nickel.

6. A method of making a saggar according to any claim 1 to 5 for use in a kiln, the method comprising:
pressure casting a slip composition within a mould cavity at a pressure from about 200 kPa to about 4000 kPa to form a green saggar body;
removing the green saggar body from the mould cavity; and
firing the green saggar body to produce a fired saggar body.

7. The method according to claim 6, wherein the pressure casting is low-pressure casting or high-pressure casting.

8. The method according to claim 6 or claim 7, wherein, during pressure casting of the slip composition within the mould cavity, filtrate is removed from the mould cavity via an outlet configured to impede passage of a solid component of the slip composition therethrough.

9. The method according to any claim 6 to 8, wherein the slip composition comprises one or more phyllosilicate minerals and water;
wherein the one or more phyllosilicate minerals comprise: kaolin; calcined kaolin, smectite; illite; clay; calcined clay; talc; vermiculite; palygorskite; sepiolite; and/or any combination thereof;
wherein the slip composition comprises: alumina, for example, calcined alumina; corundum; magnesium carbonate, for example, magnesite; mullite; kyanite; a spinel; and/or any combination thereof; preferably wherein the slip composition comprises kaolin, calcined kaolin, talc, calcined alumina, corundum, mullite and/or calcined clay, and/or any combination thereof.

10. The method according to claim 9, wherein the slip composition comprises: from about 70 wt. % to about 90 wt. %, for example, from about 75 wt. % to about 85 wt. %, phyllosilicate minerals; from about 1 wt. % to about 10 wt. %, for example, from about 2 wt. % to about 8 wt. %, alumina (for example, calcined alumina); from about 5 wt. % to about 20 wt. %, for example, from about 10 wt. % to about 29 wt. %, mullite.

11. The method according to any claim 6 to 10, wherein the green saggar body is fired at a temperature from about 1300 °C to about 1450 °C.

12. A saggar obtained by the method according to any claim 6 to 11.
